# EUROPÄISCHE PATENTSCHRIFT

(11) **EP 0 636 748 B1**
(45) Veröffentlichungstag und Bekanntmachung des Hinweises auf die Patenterteilung: **17.01.1996**
(21) Anmeldenummer: 94111629.5
(22) Anmeldetag: 26.07.1994
(51) Int. Cl.: E02D 17/20, E02D 3/12

(54) **Verfahren zur Sicherung von rutschungsgefährdeten Hängen und Sanierung von Rutschungen bei bindigen, quellfähig bindigen bis generell feinkörnigen Böden, bei denen ein untergeordneter Grobanteil vorhanden sein kann**
Method for protecting potential landslide slopes and stabilising of landslides by coherent, swellable coherent to generally a finegraded soils, in which a minor coarse part can be present
Procédé pour sécuriser les surplombs en danger de glissement et pour la stabilisation de surplombs en sols cohérents, sols à cohérence expansible et sols à structure granulaire fine, lesquels peuvent présenter conjointement des particules grossières

(30) Priorität: 26.07.1993 DE 4325048
(43) Veröffentlichungstag der Anmeldung: 01.02.1995
(73) Patentinhaber: FLOWTEX TECHNOLOGIE IMPORT VON KABELVERLEGEMASCHINEN GmbH, D-76295 Ettlingen (DE)
(72) Erfinder: Bayer, Hans-Joachim, Dr., D-76275 Ettlingen (DE)
(74) Vertreter: Füchsle, Klaus, Dipl.-Ing.

(56) Entgegenhaltungen:
- GB-A- 148 701
- US-A- 4 714 376

## Beschreibung

Die Erfindung betrifft ein Verfahren zur Sicherung von rutschungsgefährdeten Hängen und Sanierung von Rutschungen bei bindigen quellfähig bindigen bis generell feinkörnigen Böden, bei denen ein untergeordneter Grobanteil vorhanden sein kann.

Rutschungen bzw. Hanggleitungen kommen von allem in tonigen, tonig-schluffigen und tonig-mergeligen Gesteinsfolgen vor. Hierdurch können große volkswirtschaftliche Schäden an Straßen, Eisenbahnen und auch bewohnten Gebieten verursacht werden. Oftmals ist es notwendig, rutschungsgefährdete Hänge zu sichern, damit daraufstehende oder darunterliegende Bauwerke und Verkehrswege oder dergleichen, nicht gefährdet werden.

Zur Sicherung und Sanierung von solchen rutschungsgefährdeten Hängen und Rutschungen sind verschiedenste Verfahren bekannt.

Bei den meisten Verfahren soll zuerst eine Entwässerung der Gleitfläche geschaffen werden, damit die Rutschung zum Stillstand gebracht wird oder zumindestens verlangsamt werden kann. Hierfür werden im bergmännischen Verfahren vorgetriebene horizontale Stollen unterhalb des gefährdeten Hanges bzw. der Rutschung oder Horizontalpressungen eingebracht.

Des weiteren sind Kreinerwände oder Gitterwände bekannt, die am unteren Ende der Rutschung eingebaut werden, um den Hang zu sichern.

Wenn möglich, werden Anker und Bohrpfahlwände durch den Rutschhang hindurch senkrecht nach unten oder schräg in feste Gesteinsschichten eingebracht. Hierfür müssen sehr schwere Fahrzeuge auf den Rutschhang aufgefahren werden, wodurch die Gefahr, daß der Hang kriecht oder rutscht, weiter erhöht wird. Ebenso erhöhen die beim Einbringen der Anker und Bohrpfahlwände entstehenden Vibrationen die Rutschgefahr des Hanges.

Es ist auch ein Verfahren bekannt, bei dem von der Oberfläche aus senkrecht nach unten durch den Rutschhang hindurch in festes Gestein Bohrungen eingebracht und durch Zementinjektionen in den umliegenden Bodenbereich Verfestigungen erreicht werden. Durch eine Vielzahl von derartigen Zementinjektionen werden die Stabilitätsverhältnisse des Bodens wesentlich verbessert und die Rutschung zum Stillstand gebracht. Dieses bekannte Verfahren hat jedoch wiederum den Nachteil, daß schwere Fahrzeuge auf den rutschungsgefährdeten Hang aufgefahren werden müssen. Die genannten Verfahren können deshalb nicht bei allen Hanggleitungen bzw. Rutschungen eingesetzt werden, da es oftmals nicht möglich ist, ohne Gefährdung von Gerät und Personal auf den Rutschhang aufzufahren.

Des weiteren ist ein Verfahren zur Entwässerung von Rutschungen und Hanggleitungen bekannt, bei dem von einer Stelle unterhalb des Rutschhangs eine verlaufsgesteuerte Bohrung bis an die Gleitfläche vorangetrieben wird, so daß das anfallende Wasser durch die Bohrung abfließen kann. Hierdurch kann die Rutschungsgefahr vermindert oder eventuell sogar gänzlich beseitigt werden.

Das der Erfindung zugrundeliegende technische Problem besteht darin, einen rutschungsgefährdeten Hang bzw. einen Rutschhang gefahrlos für Bedienpersonal und Gerät, sicher, schnell und kostengünstig gegen weiteres Rutschen zu sichern bzw. zu sanieren, so daß unter Umständen auch die weitere Benutzung bereits gefährdeter Bauten sichergestellt wird.

Die Lösung dieses technischen Problems besteht darin, ein Verfahren zur Sicherung von rutschungsgefährdeten Hängen und zur Sanierung von Rutschungen bei bindigen, quellfähig bindigen bis generell feinkörnigen Böden, bei denen ein untergeordneter Grobanteil vorhanden sein kann, wie Tone, Schluffe, Mergel, Letten, Schlier oder dergleichen, zu schaffen, bei dem von zumindestens einer Stelle außerhalb des rutschungsgefährdeten Bereichs des Hanges oder der Rutschung aus mindestens eine vollkommen verlaufsgesteuerte Bohrung von unter- oder oberhalb oder seitlich des Rutschhanges aus vorangetrieben wird und die vollkommen verlaufsgesteuerte Bohrung dann an gewünschter Stelle durch die Gleitfläche der Rutschung hindurch in den Rutschhang vorangetrieben wird und von der Bohrung aus geeignete Injektionsmittel zur Verfestigung des umliegenden Bodenbereiches injiziert werden.

Der Erfindung liegt der Gedanke zugrunde, die bisherigen notwendigen Auflasten bzw. Vibrationen auf schon rutschungsgefährdeten Hängen bzw. Rutschungen vollkommen zu vermeiden, damit eine Erhöhung der Rutschungsgefahr unterbleibt. Des weiteren soll erreicht werden, daß an jeder beliebigen Stelle in den Rutschhang Injektionen zur Verankerung des Rutschhangs zum anstehenden Gebirge erfolgen und dies ohne Gefährung von teuerem Gerät und Bedienpersonal.

Die Verankerung des Rutschhanges mit dem darunterliegenden anstehenden Gebirge kann optimal durch Bohrungen erreicht werden, die bevorzugt von unterhalb des Rutschhangs gelegenen Stellen zuerst tief in das feststehende Gebirge eingebracht und dann ferngesteuert, je nach Bodengegebenheiten, durch die Gleitfläche hindurch im wesentlichen vertikal nach oben in den Rutschhang vorangetrieben werden. Durch derartige Bohrungen kann eine sehr tiefe Verankerung des Rutschhanges mit dem anstehenden Gebirge erreicht werden. Hierzu werden bei den im wesentlichen vertikalen Bohrabschnitten geeignete Injektionsmittel zur Verfestigung des umliegenden Bodenbereiches der Bohrung injiziert, wodurch sich eine kraftschlüssige Verbindung von Rutschhang und anstehendem Gebirge ausbildet.

Besonders vorteilhaft ist bei dem erfindungsgemäßen Verfahren, daß die Bohrung je nach örtlichen Gegebenheiten von jeder Stelle außerhalb des Rutschhanges aus vorangetrieben werden kann. Dadurch wird erreicht, daß Gerät und Personal nicht zusätzlich gefährdet werden. Des weiteren wird durch die unterhalb oder seitlich des Rutschhanges eingebrachten Bohrungen erreicht, daß verschiedenartigste Bohrverläufe möglich sind und je nach Bedingungen auch schon bestehende Verbauungen und Sicherungen eingebunden oder wenn nötig unterfahren werden können.

Mit dem erfindungsgemäßen Verfahren ist es vorteilhafterweise auch möglich, die Bohrungen von einer Stelle oberhalb des Rutschhanges aus voranzutreiben, im Falle, daß keine andere Zugangsmöglichkeit besteht. Somit ist erstmals auch für derartige Gebiete eine Sicherung bzw. Sanierung eines Rutschhanges möglich.

Es ist insbesondere vorteilhaft, daß bei dem erfindungsgemäßen Verfahren von einer Stelle außerhalb des Rutschhangs mehrere Bohrungen vorangetrieben werden können, so daß schweres Bohrgerät nicht ständig bewegt werden muß. Hierdurch wird eine schnelle und effiziente Sicherung des rutschgefährdeten Gebiets erreicht.

Die Führung der Bohrung bis unterhalb der Oberfläche des Rutschhanges ist dann sehr vorteilhaft, wenn auf den rutschungsgefährdeten Hängen bzw. den Rutschungen stehende Gebäude oder dergleichen ein Durchstoßen der Bohrung verbieten. Das erfindungsgemäße Verfahren bietet also gegenüber dem bekannten Stand der Technik die Möglichkeit, auch dort Verankerungen im Rutschhang anzubringen, die von außen, das heißt von der Oberfläche aus, nicht zugänglich sind.

Zusätzlich ist es sehr vorteilhaft, daß durch das erfindungsgemäße Verfahren beim Einbringen der Bohrung in und durch die Gleitfläche das Wasser zwischen der Bohrwandung und dem Bohrkopf bzw. dem Bohrgestänge entlang, durch die mindestens mit leichter Neigung verlaufende Bohrung bis unterhalb des Rutschhangs abfließen kann. Aufgrunddessen ist vorteilhafterweise eine Entwässerung des Rutschhangs schon beim Bohren gewährleistet, wodurch die Rutschgefahr des Hanges bereits beträchtlich abnimmt.

Vorteilhafterweise können eine Vielzahl von Bohrungen von einer oder mehreren Stellen außerhalb des Rutschhangs vorangetrieben und in den Rutschhang eingebracht werden, wodurch beliebige Veteilungen von Bodenverankerungen durch Injektionen denkbar sind. So können strahlenförmige Injektionen im umliegenden Bodenbereich einer Bohrung eingebracht werden, die zusammenwirkend zur Rutschrichtung des Hanges querliegende Riegelbauwerke bilden und eine gute Sicherung gegen weiteres Bewegen des Rutschhanges darstellen. Auch scheiben- oder walzenförmig im umliegenden Bodenbereich einer Bohrung verteilte Injektionen sind möglich.

Eine besonders vorteilhafte Verteilung der Bohrungen mit minimalem Gerätestandwechsel wird dann erreicht, wenn von zwei außerhalb der Rutschhangs liegende Stellen aus eine Vielzahl von Bohrungen unterhalb des Rutschhangs vorangetrieben werden und durch die Gleitfläche bis zur Oberfläche des Rutschhanges hin im wesentlichen senkrecht verlaufen und dann die Bodenbereiche der im wesentlichen senkrechten Bohrabschnitte mit Injektionsmittel injiziert werden.

Oftmals kann die Neigung zur weiteren Rutschung des Hanges verhindert werden, indem der Rutschhang in einzelne Parzellen zerlegt wird. Eine optimale Parzellierung des Rutschhanges wird beim erfindungsgemäßen Verfahren dadurch erreicht, daß von einer Vielzahl von Stellen unterhalb des Rutschhanges aus jeweils mindestens paarweise spitzwinklig zueinander verlaufende Bohrungen im wesentlichen parallel zur Rutschrichtung in den Rutschhang eingebracht werden. Die von den benachbarten Stellen aus vorgetriebenen Bohrungen liegen dabei im wesentlichen parallel zueinander und es wird dann in geeigneten Bohrungsabschnitten Injektionsmittel in den Boden eingebracht.

Auch ist es erstmals mit dem erfindungsgemäßen Verfahren möglich, von einer Stelle seitlich des Rutschhangs aus Bohrungen quer zur Rutschrichtung des Hanges durch den Rutschhang hindurch auf gegenüberliegendes anstehendes Gebirge einzubringen und auf der ganzen Strecke der Bohrungen Injektionsmittel zu injizieren. Hierdurch werden vorteilhafterweise sehr wirksame Querriegel geschaffen, die effektiv ein Weiterrutschen des Hanges unterbinden.

Vorteilhafterweise werden derartige Querriegel im oberen Bereich des Rutschhanges in der Nähe des Rutschungsabrisses eingebracht, so daß ein weiteres Nachrutschen des Hanges unterbunden wird.

Es ist insbesondere vorteilhaft, daß bei dem erfindungsgemäßen Verfahren die Bohrungen so unterhalb des Rutschhanges in den Rutschhang hinein eingebracht werden können, daß auch der rechnerisch ermittelte maximale Gleitkreis durchstoßen wird. Dadurch wird eine bestmöglichste Sicherung des Rutschhanges erreicht. Eine weitere Bildung einer neuen Gleitfläche, die durch die rechnerisch ermittelten Gleitkreise erfaßt wird, kann durch das erfindungsgemäße Verfahren mit einbezogen und eine weitere Rutschung bestmöglichst unterbunden werden.

Als Injektionsmittel sind besonders Bindemittel auf Zementbasis vorteilhaft, es sind jedoch auch andere zur Verfestigung des Bodens geeignete Injektionsmittel möglich. Als weitere Injektionsmittel sind bei dem erfindungsgemäßen Verfahren einsetzbar: Ultrafeinzemente, Wachse, Harze, Wasserglaslösungen/Silikatgele, Polymersilikate, Phenoplaste, Aminoplaste, Lignosulfide, Lignosulfonate, Acrylamine, Schaumstoffe, Bitumen sowie Füllstoffe wie Gesteinsmehl, Schlacken, Aschen, Sand oder dergleichen.

Durch engständigem Wechsel zwischen Injektions- und Drainagebohrungen ist weiterhin eine besonders intensive Hangberuhigung möglich.

Im folgenden sind zur weiteren Erläuterung und zum besseren Verständnis der Erfindung mehrere Ausführungsbeispiele des erfindungsgemäßen Verfahrens unter Bezugnahme auf die beigefügten Zeichnungen näher erläutert und beschrieben. Es zeigt:
- Fig. 1a: einen Querschnitt durch einen Rutschhang mit in der Querschnittsebene liegenden Bohrungen und Injektionsbereichen,
- Fig. 1b: einen Querschnitt durch einen Rutschhang mit in der Querschnittsebene liegenden Bohrungen und Injektionsbereichen, die sich überschneiden,
- Fig. 2: eine Schrägansicht auf einen aufgeschnittenen bzw. abgedecktem Rutschhang, bei dem fächerförmig querstehende Injektionsbereiche angedeutet sind,
- Fig. 3: eine Draufsicht auf einen aufgeschnittenen Rutschhang, bei dem von jeweils einer außerhalb des Rutschhangs liegenden Stelle eine Anzahl von Bohrungen bis in den Rutschhang vorangetrieben sind,
- Fig. 4: eine Draufsicht auf einen aufgeschnittenen Rutschhang, bei dem von zwei außerhalb des Rutschhanges liegenden Stellen jeweils eine Anzahl Bohrungen bis in den Rutschhang vorangetrieben sind und in der Draufsicht eine Art Netz bilden,
- Fig. 5: eine Draufsicht auf einen aufgeschnittenen Rutschhang, bei dem von einer Anzahl unterhalb des Rutschhanges liegenden Stellen jeweils mindestens zwei Bohrungen spitzwinklig zueinander, im wesentlichen parallel zur Rutschrichtung des Hanges verlaufen,
- Fig. 6: eine Draufsicht auf einen aufgeschnittenen Rutschhang mit im oberen Bereich des Rutschhangs, quer zur Rutschrichtung, von einer Stelle seitlich des Rutschhangs, durch den Rutschhang bis auf anstehendes Gebirge hindurch vorangetriebenen Bohrungen,
- Fig. 7a: eine schematische Darstellung eines spiralförmigen Injektionsbereichs um eine Bohrung, und
- Fig. 7b: eine beispielhafte Darstellung eines gleichmäßig im umliegenden Bereich einer Bohrung verteilten Injektionsbereiches.

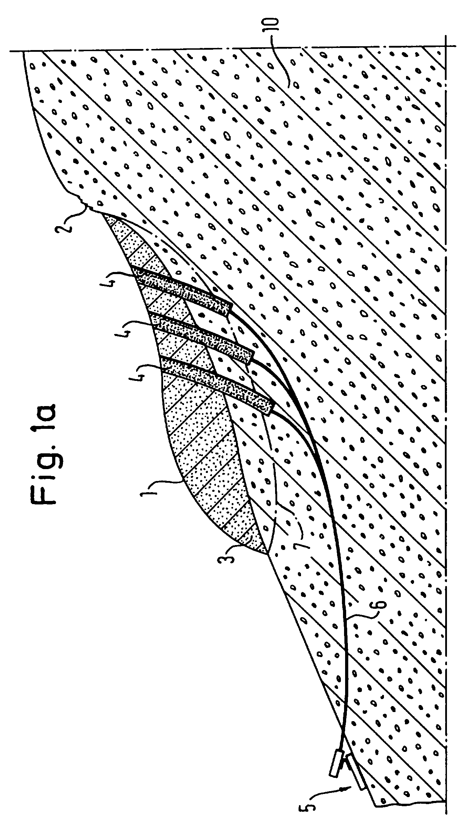

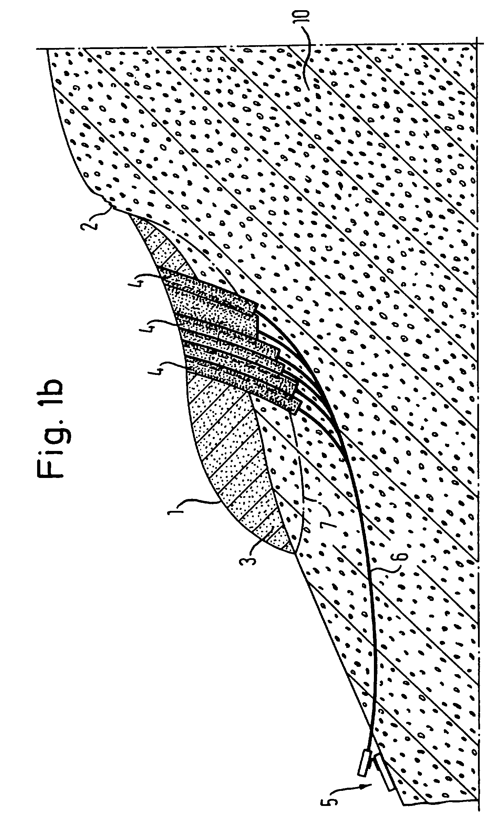

In der Fig. 1a ist ein Querschnitt durch einen Rutschhang 1 dargestellt, der eine Gleitfläche 3 und im oberen Bereich einen Rutschungsabriß 2 aufweist. Des weiteren ist ein errechneter Gleitkreis 7 mit strichpunktierter Linie eingezeichnet, der die maximale Gleitfläche des Rutschhangs 1 darstellt. Von einer Stelle 5 unterhalb des Rutschhangs verlaufen verschiedene Bohrungen 6 in einem ersten Abschnitt leicht ansteigend bis durch anstehendes Gebirge 10. In einem zweiten Abschnitt verlaufen die Bohrungen mit verschieden steiler werdender Neigung durch den Gleitkreis 7 und die Gleitfläche 3 hindurch bis an die Oberfläche des Rutschhangs 1. In diesen steilen, im wesentlichen senkrechten Abschnitten der Bohrungen 6 sind schematisch Injektionsbereiche dargestellt, die den Rutschhang 1 mit dem anstehenden Gebirge 10 kraftschlüssig verbinden. Um diese verschiedenen Bohrungen 6 voranzutreiben, ist ein Bohrgerät 5 unterhalb des Rutschhangs aufgefahren. Mit dem Bohrgerät 5 können von einer Stelle aus verschiedene Bohrungen bis in oder durch den Rutschhang vorangetrieben werden und beim Zurückziehen des Bohrkopfs Injektionsmittel in verschiedenster Weise in die umliegenden Bodenbereiche der Bohrungen 6 injiziert werden.

Der in der Fig. 1b dargestellte Querschnitt durch den Rutschhang 1 entspricht dem aus der Fig. 1a, jedoch überschneiden sich bei dieser Vorgehensweise die Injektionsbereiche der einzelnen Bohrungen 6.

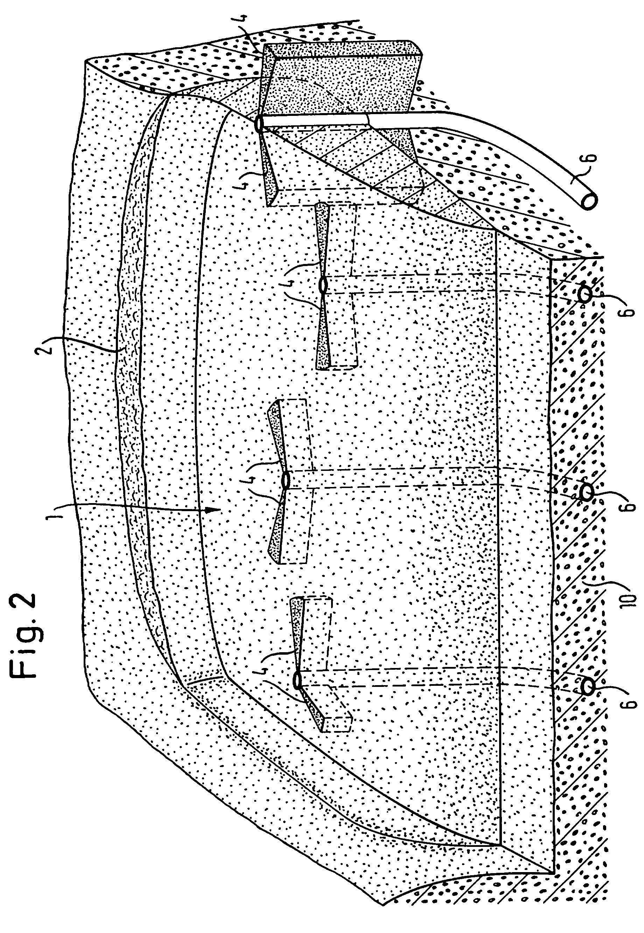

Eine Möglichkeit der verschiedenen Formen der Injizierung von Injektionsmittel in die umliegenden Bodenbereiche einer Bohrung 6 ist aus Fig. 2 ersichtlich. In Fig. 2 ist schematisch ein aufgeschnittener bzw. abgedeckter Rutschhang 1 mit dem Rutschungsabriß 2 dargestellt. Verschiedene Bohrungen 6 reichen in den Rutschhang 1 hinein und weisen jeweils strahlenförmig von der Bohrung 6 ausgehende Injektionsbereiche 4 auf, die sich im wesentlichen quer zur Rutschrichtung des Hanges erstrecken. Zusammenwirkend bilden die Injektionsbereiche 4 einen wirksamen Querriegel, der sich über den ganzen Rutschhang 1 erstreckt und bis tief in anstehendes Gebirge 10 reicht.

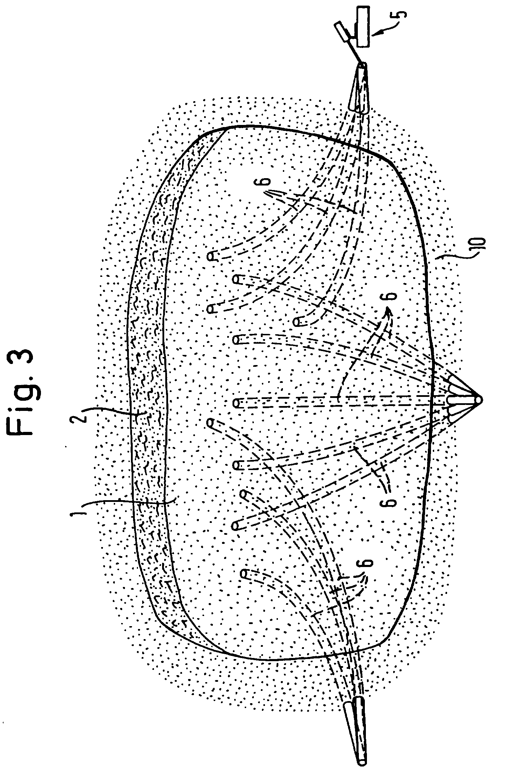

In Fig. 3 ist wiederum schematisch ein Rutschhang 1 mit einem Rutschungsabriß 2 dargestellt, in dem von verschiedenen seitlich oder unterhalb des Rutschhangs 1 liegenden Stellen jeweils eine Anzahl von Bohrungen 6 bis in den Rutschhang 1 hinein verlaufen. Alle Bohrungen 6 durchstoßen die Gleitfläche des Rutschhangs 1 von unten und verlaufen steil bis in den Rutschhang 1. Die Injektionsbereiche sind hier nicht dargestellt, jedoch wird in allen Bohrungen in den steilen Bereichen Injektionsmittel in die umliegenden Bodenbereiche der jeweiligen Bohrung 6 injiziert. Die gezeigte Verteilung der Bohrungen ist sehr effizient, da das Bohrgerät 5 jeweils von einer Stelle aus verschiedenste Bohrungen 6 vorantreiben kann.

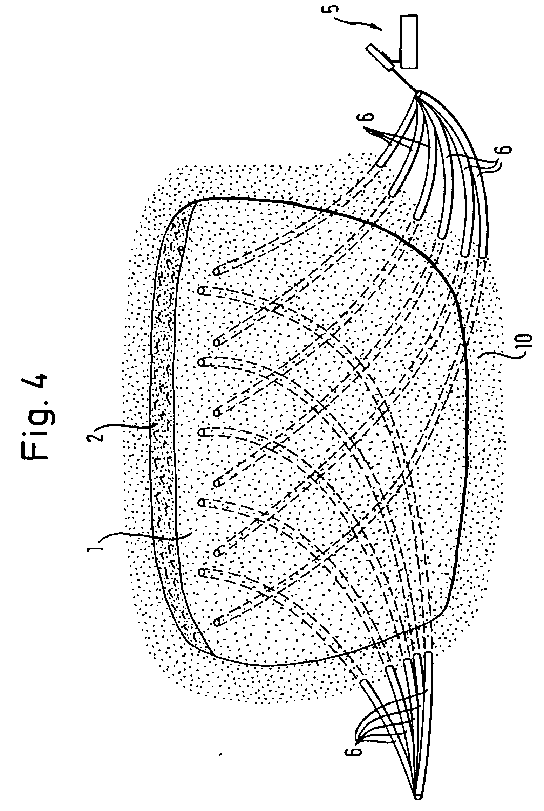

Aus der Fig. 4 ist ähnlich der Fig. 3 eine Verteilung der bis in den Rutschhang 1 verlaufenden Bohrungen 6 schematisch dargestellt. Bei dieser Verteilung der Bohrungen 6 muß kein Bohrgerät 5 unterhalb des Rutschhangs aufgefahren werden, was eventuell eine sehr hohe Gefahr für Gerät und Bedienpersonal sein kann. Die in der Draufsicht netzförmige Verteilung der Bohrungen 6 ergibt hier eine sehr gleichmäßige Verteilung der nicht dargestellten Injektionsbereiche, die sich von der Oberfläche des Rutschhangs bis tief in anstehendes Gebirge erstrecken. Hierdurch ist eine effiziente kostengünstige, aber auch sehr gute Sicherung des Rutschhanges gewährleistet.

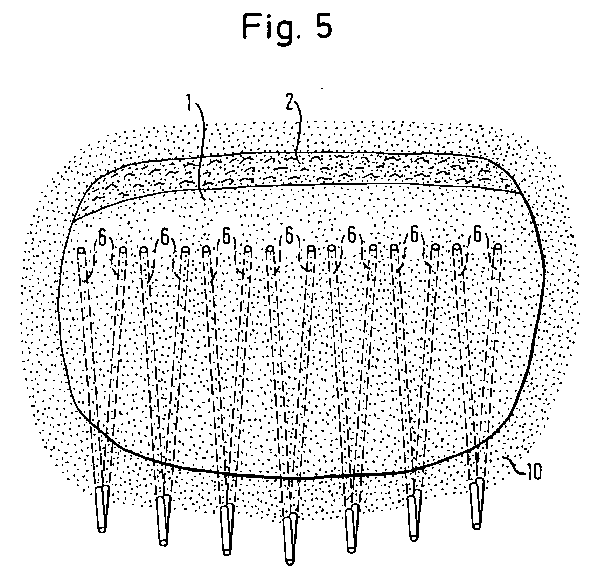

Eine weitere beispielhafte Verteilung der Bohrungen 6 nach dem erfindungsgemäßen Verfahren ist in Fig. 5 gezeigt. Bei diesem Beispiel verlaufen jeweils mindestens zwei Bohrungen 6 von einer Stelle unterhalb des Rutschhangs 1 im wesentlichen parallel zur Rutschrichtung des Hanges bis in den Rutschhang 1. Die von einer Stelle aus ausgehenden Bohrungen 6 bilden dabei einen spitzen Winkel. Eine Anzahl von solch spitzwinklig zueinander verlaufenden Bohrungen 6 liegen in der Draufsicht im wesentlichen parallel zueinander. Durch diese Verteilung der Bohrungen 6 wird eine Parzellierung des Rutschhangs 1 in einzelne Segmente erreicht, wodurch durch die im Rutschhang bis in anstehendes Gebirge 10 reichenden Bohrabschnitte wiederum im Bereich der steileren Bohrabschnitte mit Injektionsmittel behandelt sind. Dadurch wird eine gute Verbindung zwischen Rutschhang 1 und feststehendem Gebirge 10 erreicht.

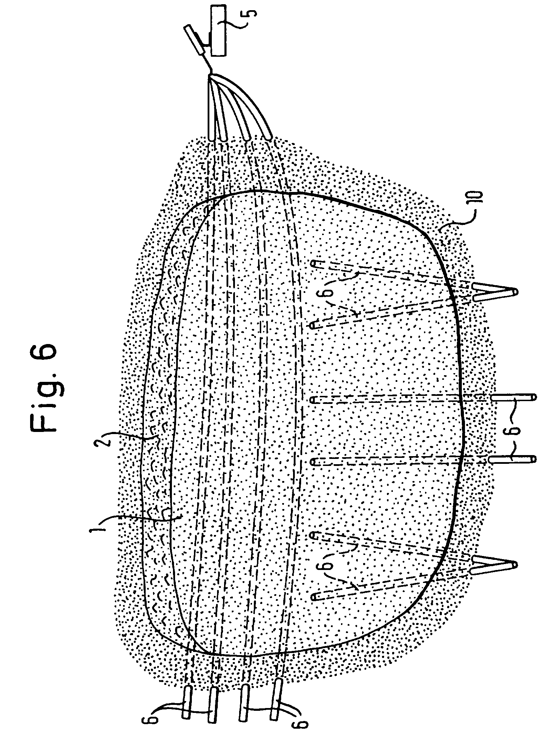

Ein anderes Ausführungsbeispiel ist in der Fig. 6 gezeigt. Dort verlaufen eine Anzahl Bohrungen 6 gemäß dem Ausführungsbeispiel aus Fig. 5 und zusätzlich sind quer zur Rutschrichtung des Hanges 1 im oberen Hangverdünnungsgebiet, das heißt in der Nähe des Rutschabbruchs 2, liegende Bohrungen eingebracht. Die quer verlaufenden Bohrungen 6 beginnen seitlich des Rutschhanges 1, verlaufen durch anstehendes Gebirge 10 in den Rutschhang 1 hinein und stoßen auf der gegenüberliegenden Seite des Rutschhanges 1 wiederum in anstehendes Gebirge 10. Das Injektionsmittel wird dann in die umliegenden Bodenbereiche der jeweiligen Bohrungen 6 auf solch einer Länge injiziert, so daß ein von anstehendem Gebirge 10 durch den Rutschhang 1 bis wiederum in anstehendes Gebirge 10 reichender Querriegel gebildet wird. Durch eine Anzahl solcher Querriegel wird eine optimale Sicherung des oberen Bereiches, eventuell auch im tiefer liegenden Rutschhangbereich, erzielt. Außerdem ist durch die seitliche Anordnung des Bohrgeräts 5 eine Gefährdung von Bedienpersonal und des Geräts selbst bei eventuell weiterrutschendem Rutschhang 1 vermieden.

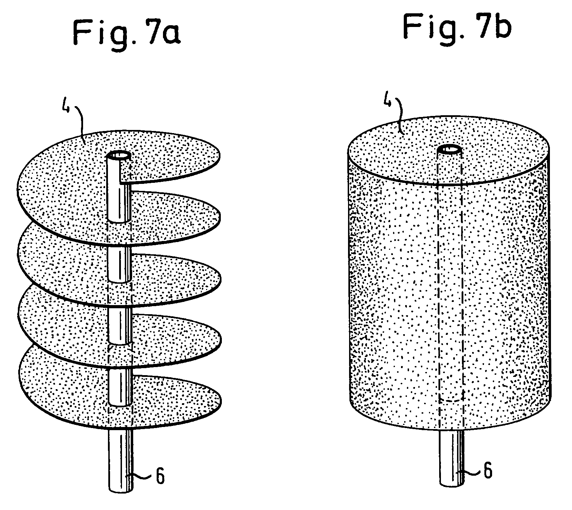

In den Fig. 7a und 7b sind weitere beispielhafte Injektionsbereiche im Boden dargestellt. Die Fig. 7a zeigt, daß durch die Rotation und einer Bewegung längs der Bohrungsachse der Bohrung 6 ein schraubenförmiger Injektionsbereich 4 im Umkreis der Bohrung 6 gebildet wird. Eine solche Ausbildung der injizierten Bodenbereiche stellt eine optimale kraftschlüssige Verbindung im Rutschhang dar.

Eine walzenförmige Ausbildung der injizierten Bodenbereiche ist in Fig. 7b schematisch dargestellt. Auch eine solche Verteilung, bei der der gesamte Bodenbereich in einem vorbestimmten Radius um die Bohrung 6 mit Injektionsmittel injiziert wurde, stellt bei bestimmten Böden die optimale kraftschlüssige Verbindung zwischen Rutschhang und anstehendem Gebirge dar.

## Patentansprüche

1. Verfahren zur Sicherung von rutschungsgefährdeten Hängen und zur Sanierung von Rutschungen bei bindigen, quellfähig bindigen bis generell feinkörnigen Böden, bei denen ein untergeordneter Grobanteil vorhanden sein kann, bei dem
- von zumindestens einer Stelle außerhalb des rutschungsgefährdeten Bereichs des Hanges oder der Rutschung (1) aus mindestens eine vollkommen verlaufsgesteuerte Bohrung (6) von unter- oder oberhalb oder seitlich des Rutschhanges (1) aus vorangetrieben wird,
- die vollkommen verlaufsgesteuerte Bohrung (6) dann an gewünschter Stelle durch die Gleitfläche (3) der Rutschung (1) hindurch in den Rutschhang (1) vorangetrieben wird und
- von der Bohrung (6) aus geeignete Injektionsmittel zur Verfestigung des umliegenden Bodenbereiches (4) injiziert werden.

2. Verfahren zur Sicherung von rutschungsgefährdeten Hängen und zur Sanierung von Rutschungen nach Anspruch 1, dadurch gekennzeichnet, daß die verlaufsgesteuerte Bohrung (6) mittels eines ferngesteuerten Bohrkopfs vorangetrieben wird.

3. Verfahren zur Sicherung von rutschungsgefährdeten Hängen und zur Sanierung von Rutschungen nach Anspruch 1 oder 2, dadurch gekennzeichnet, daß die verlaufsgesteuerte Bohrung (6) durch die Gleitfläche (3) und den Rutschhang (1) hindurch steiler verläuft als unterhalb der Gleitfläche (3).

4. Verfahren zur Sicherung von rutschungsgefährdeten Hängen und zur Sanierung von Rutschungen nach einem der vorhergehenden Ansprüche, dadurch gekennzeichnet, daß von einer Stelle außerhalb des rutschungsgefährdeten Hanges oder der Rutschung (1) mehrere verlaufsgesteuerte Bohrungen (6) vorangetrieben werden.

5. Verfahren zur Sicherung von rutschungsgefährdeten Hängen und zur Sanierung von Rutschungen nach einem der vorhergehenden Ansprüche, dadurch gekennzeichnet, daß die Bohrung (6) bis unterhalb der Oberfläche des rutschungsgefährdeten Hanges oder der Rutschung (1) vorangetrieben wird.

6. Verfahren zur Sicherung von rutschungsgefährdeten Hängen und zur Sanierung von Rutschungen nach einem der vorhergehenden Ansprüche, dadurch gekennzeichnet, daß beim Durchstoßen der Bohrung (6) durch die Gleitfläche (3) des Rutschhanges (1) darauf stauendes, gesättigt anstehendes bzw. fließendes Wasser durch die Bohrung (6) abfließt.

7. Verfahren zur Sicherung von rutschungsgefährdeten Hängen und zur Sanierung von Rutschungen nach einem der vorhergehenden Ansprüche, dadurch gekennzeichnet, daß eine Vielzahl von Bohrungen (6) durch die Gleitfläche (3) des Rutschhanges (1) hindurch in den Rutschhang (1) bis unterhalb dessen oder durch dessen Oberfläche vorangetrieben werden.

8. Verfahren zur Sicherung von rutschungsgefährdeten Hängen und zur Sanierung von Rutschungen nach einem der vorhergehenden Ansprüche, dadurch gekennzeichnet, daß beim Zurückziehen des Bohrkopfes in die umliegenden Bodenbereiche der Bohrung geeignete Injektionsmittel zur Verfestigung des umliegenden Bodenbereiches (4) injiziert werden.

9. Verfahren zur Sicherung von rutschungsgefährdeten Hängen und zur Sanierung von Rutschungen nach einem der Ansprüche 1 bis 8, dadurch gekennzeichnet, daß das Injektionsmittel strahlenförmig, von der Bohrung (6) ausgehend, senkrecht zur Bohrungsachse verlaufend, injiziert wird.

10. Verfahren zur Sicherung von rutschungsgefährdeten Hängen und zur Sanierung von Rutschungen nach einem der Ansprüche 1 bis 8, dadurch gekennzeichnet, daß das Injektionsmittel scheibenförmig, das heißt senkrecht zur Bohrungsachse liegende Scheiben bildend, in die umliegenden Bodenbereiche (4) der Bohrung (6) injiziert wird.

11. Verfahren zur Sicherung von rutschungsgefährdeten Hängen und zur Sanierung von Rutschungen nach einem der vorhergehenden Ansprüche, dadurch gekennzeichnet, daß das Injektionsmittel bei rotierendem und axial in der Bohrung (6) bewegtem Bohrkopf in die umliegenden Bodenbereiche (4) eingebracht wird.

12. Verfahren zur Sicherung von rutschungsgefährdeten Hängen und zur Sanierung von Rutschungen nach einem der vorhergehenden Ansprüche, dadurch gekennzeichnet, daß eine Vielzahl von Bohrungen (6) bei der Draufsicht auf den Rutschhang (1) ein Netz von im wesentlichen senkrecht zueinander stehenden Bohrungen (6) bildet.

13. Verfahren zur Sicherung von rutschungsgefährdeten Hängen und zur Sanierung von Rutschungen nach einem der vorhergehenden Ansprüche, dadurch gekennzeichnet, daß von einer Vielzahl von unterhalb des Rutschhanges (1) liegenden Stellen davon jeweils spitzwinklig im wesentlichen parallel zur Rutschungsrichtung des Rutschhanges (1) liegende Bohrungen (6) vorangetrieben werden und hierdurch spitzwinklige Querkeile gebildet werden.

14. Verfahren zur Sicherung von rutschungsgefährdeten Hängen und zur Sanierung von Rutschungen nach einem der vorhergehenden Ansprüche, dadurch gekennzeichnet,daß von Stellen seitlich außerhalb des Rutschhanges (1) quer zur Rutschungsrichtung des Rutschhanges (1) liegende Bohrungen (6) durch den ganzen Rutschhang (1) hindurch bis in gegenüberliegendes anstehendes Gebirge (10) vorangetrieben werden.

15. Verfahren zur Sicherung von rutschungsgefährdeten Hängen und zur Sanierung von Rutschungen nach Anspruch 13, dadurch gekennzeichnet, daß die quer liegenden Bohrungen (6) im Rutschungsausdünnbereich vorangetrieben werden.

16. Verfahren zur Sicherung von rutschungsgefährdeten Hängen und zur Sanierung von Rutschungen nach einem der vorhergehenden Ansprüche, dadurch gekennzeichnet, daß in geeigneten Bohrabschnitten Injektionsmitel in die umliegenden Bodenbereiche (4) injiziert wird, so daß sich eine direkte kraftschlüssige Verbindung zum anstehenden Gebirge (10) ergibt.

17. Verfahren zur Sicherung von rutschungsgefährdeten Hängen und zur Sanierung von Rutschungen nach einem der vorhergehenden Ansprüche, dadurch gekennzeichnet, daß als Injektionsmittel Zement oder dergleichen verwendet wird.

18. Verfahren zur Sicherung von rutschungsgefährdeten Hängen und zur Sanierung von Rutschungen nach einem der vorhergehenden Ansprüche, dadurch gekennzeichnet, daß als Injektionsmittel Wachse, Harze, Polymersilikate oder andere injektionstechnisch verwendbare Stoffe eingesetzt werden.

19. Verfahren zur Sicherung von rutschungsgefährdeten Hängen und zur Sanierung von Rutschungen nach einem der vorhergehenden Ansprüche, dadurch gekennzeichnet, daß das Injektionsmittel in einem Teilabschnitt der Bohrung in die umliegenden Bodenbereiche injiziert wird, daß ein verfestigter Bodenbereich vom Rutschhang bis in anstehendes Gebirge reicht.

20. Verfahren zur Sicherung von rutschungsgefährdeten Hängen und zur Sanierung von Rutschungen nach einem der vorhergehenden Ansprüche, dadurch gekennzeichnet, daß Injektions- und Drainagebohrungen, oft in nahezu paralleler Anordnung, in wechselständiger Abfolge vorangetrieben werden.

## Claims

1. Method for protecting slopes at risk of landslides and for stabilising landslides in cohesive, swellable-cohesive to generally fine-grained soils in which there may be a minor coarse fraction, in which
- from at least one point outside the region of the slope at risk of landslide or the landslide (1), at least one bore (6) of completely controlled course is advanced from above or below or laterally of the sliding slope (1),
- the bore (6) of completely controlled course is then advanced at the desired point through the sliding surface (3) of the landslide (1) into the landslide slope (1), and
- from the bore (6), suitable injection agents are injected to consolidate the surrounding soil region (4).

2. Method for protecting slopes at risk of landslides and for stabilising landslides according to claim 1, characterised in that the bore (6) of controlled course is advanced by means of a remote-controlled drill head.

3. Method for protecting slopes at risk of landslides and for stabilising landslides according to claim 1 or 2, characterised in that the bore (6) of controlled course passes more steeply through the sliding surface (3) and the landslide slope (1) than below the sliding surface (3).

4. Method for protecting slopes at risk of landslides and for stabilising landslides according to any of the preceding claims, characterised in that from a point outside the slope at risk of landslides or the landslide (1), several bores (6) of controlled course are advanced.

5. Method for protecting slopes at risk of landslides and for stabilising landslides according to any of the preceding claims, characterised in that the bore (6) is advanced to below the surface of the slope at risk of landslide or the landslide (1).

6. Method for protecting slopes at risk of landslides and for stabilising landslides according to any of the preceding claims, characterised in that when the bore (6) is pushed through the sliding surface (3) of the landslide slope (1), water which accumulates, occurs in saturation or flows thereon runs off through the bore (6).

7. Method for protecting slopes at risk of landslides and for stabilising landslides according to any of the preceding claims, characterised in that a plurality of bores (6) are advanced through the sliding surface (3) of the landslide slope (1) into the landslide slope (1) to below it or through its surface.

8. Method for protecting slopes at risk of landslides and for stabilising landslides according to any of the preceding claims, characterised in that on withdrawal of the drill head, suitable injection agents are injected into the surrounding soil regions of the bore to consolidate the surrounding soil region (4).

9. Method for protecting slopes at risk of landslides and for stabilising landslides according to any of the claims 1 to 8, characterised in that the injection agent is injected in a jet, starting from the bore (6), running perpendicularly to the axis of the bore.

10. Method for protecting slopes at risk of landslides and for stabilising landslides according to any of the claims 1 to 8, characterised in that the injection agent is injected in a disc shape, that is, forming discs lying perpendicularly to the axis of the bore, into the surrounding soil regions (4) of the bore (6).

11. Method for protecting slopes at risk of landslides and for stabilising landslides according to any of the preceding claims, characterised in that the injection agent is introduced into the surrounding soil regions (4) while the drill head is rotating and moving axially in the bore (6).

12. Method for protecting slopes at risk of landslides and for stabilising landslides according to any of the preceding claims, characterised in that a plurality of bores (6), in a view of the landslide slope (1) from above, forms a network of bores (6) essentially perpendicular to each other.

13. Method for protecting slopes at risk of landslides and for stabilising landslides according to any of the preceding claims, characterised in that from a plurality of points located below the landslide slope (1), bores (6) lying in each case at an acute angle essentially parallel to the landslide direction of the landslide slope (1) are advanced therefrom, and acute-angled transverse wedges are formed as a result.

14. Method for protecting slopes at risk of landslides and for stabilising landslides according to any of the preceding claims, characterised in that from points laterally outside the landslide slope (1), bores (6) lying transversely to the landslide direction of the landslide slope (1) are advanced through the whole landslide slope (1) into outcropping rock (10) opposite.

15. Method for protecting slopes at risk of landslides and for stabilising landslides according to claim 13, characterised in that the transversely located bores (6) are advanced in the landslide thin-out region.

16. Method for protecting slopes at risk of landslides and for stabilising landslides according to any of the preceding claims, characterised in that injection agent is injected into the surrounding soil regions (4) in suitable drilling sections, so that there is a direct force-locking connection with the outcropping rock (10).

17. Method for protecting slopes at risk of landslides and for stabilising landslides according to any of the preceding claims, characterised in that cement or the like is used as the injection agent.

18. Method for protecting slopes at risk of landslides and for stabilising landslides according to any of the preceding claims, characterised in that waxes, resins, polymer silicates or other materials which can be used in injection technology are used as the injection agent.

19. Method for protecting slopes at risk of landslides and for stabilising landslides according to any of the preceding claims, characterised in that the injection agent is injected into the surrounding soil regions in a partial section of the bore, and in that a consolidated soil region extends from the landslide slope into outcropping rock.

20. Method for protecting slopes at risk of landslides and for stabilising landslides according to any of the preceding claims, characterised in that injection and drainage bores are advanced in alternate sequence, often in almost parallel arrangement.

## Revendications

1. Procédé pour sécuriser les surplombs en danger de glissement et pour la stabilisation dans le cas de glissements en sols cohérents en sols à cohérence expansible et en sols à structure granulaire généralement fine, lequels peuvant présenter conjointement une teneur mineure en particules grossières, dans lequel
- depuis au moins un endroit hors de la zone en danger de glissement du surplomb ou bien de la masse glissante (1), on fore depuis au moins un forage (6) dont l'allure est totalement sujette à une commande, depuis le dessous ou le dessus, ou le côté du surplomb glissant (1),
- on poursuit ensuite le perçage (6) dont l'allure est totalement soumis à une commande à l'endroit souhaité, en traversant la surface de glissement (3) de la masse glissante (1), en pénétrant dans le surplomb glissant (1), et
- on injecte à partir du perçage (6) un produit d'injection approprié, destiné à consolider la zone du sol environnante.

2. Procédé pour sécuriser des surplombs en danger de glissement et pour la stabilisation de glissements, selon la revendication 1, caractérisé en ce que le forage (6) à commande d'allure est conduit au moyen d'une tête de forage commandée à distance.

3. Procédé pour sécuriser des surplombs en danger de glissement et pour la stabilisation de glissements, selon la revendication 1 ou 2, caractérisé en ce que le forage (6) dont l'allure est commandée est d'une pente plus raide lorsqu'il pénètre dans la face de glissement (3) et le surplomb glissant (1) que la pente qu'il a au-dessous de la phase de glissement (3).

4. Procédé pour sécuriser des surplombs en danger de glissement et pour la stabilisation de glissements, selon l'une des revendications précédentes, caractérisé en ce que l'on perce plusieurs forages (6) dont l'allure est commandée, depuis un point situé à l'extérieur du surplomb en danger de glissement ou de la masse glissante.

5. Procédé pour sécuriser des surplombs en danger de glissement et pour la stabilisation de glissements, selon l'une des revendications précédentes, caractérisé en ce que le forage (6) est conduit jusqu'au-dessous de la surface du surplomb à danger de glissement ou de la masse glissante (1).

6. Procédé pour sécuriser des surplombs en danger de glissement et pour la stabilisation de glissements, selon l'une des revendications précédentes, caractérisé en ce que lorsque le forage (6) transperce la surface de glissement (3) de la masse glissante (1) l'eau qui s'est accumulée sur la surface de glissement, qui se présente en saturation ou qui ruisselle, est évacuée par le forage (6).

7. Procédé pour sécuriser des surplombs en danger de glissement et pour la stabilisation de glissements, selon l'une des revendications précédentes, caractérisé en ce qu'une pluralité de forages (6) est conduite à travers la surface de glissement (3) de la masse glissante (1), en forant dans la masse glissante (1), jusqu'à sa surface ou au-dessous de sa surface.

8. Procédé pour sécuriser des surplombs en danger de glissement et pour la stabilisation de glissements, selon l'une des revendications précédentes, caractérisé en ce que, lors de la rétraction de la tête de forage dans les zones de sol environnantes du forage, des produits d'injection appropriés sont injectés pour consolider la zone de sol (4) environnante.

9. Procédé pour sécuriser des surplombs en danger de glissement et pour la stabilisation de glissements, selon l'une des revendications 1 à 8, caractérisé en ce que le produit d'injection est injecté sous forme de jets, en partant du forage (6), jets orientés perpendiculairement à l'axe de forage.

10. Procédé pour sécuriser des surplombs en danger de glissement et pour la stabilisation de glissements, selon l'une des revendications 1 à 8, caractérisé en ce que le produit d'injection est injecté en formant un disque, c'est-à-dire est injecté en formant des disques situés perpendiculairement par rapport à l'axe de flux du forage, dans les zones de sol (4) environnantes du forage (6).

11. Procédé pour sécuriser des surplombs en danger de glissement et pour la stabilisation de glissements, selon l'une des revendications précédentes, caractérisé en ce que le produit d'injection est introduit dans les zones (4) de sol environnantes lorsque la tête de forage est en rotation et se déplace axialement dans le forage (6).

12. Procédé pour sécuriser des surplombs en danger de glissement et pour la stabilisation de glissements, selon l'une des revendications précédentes, caractérisé en ce qu'une pluralité de forages (6) constitue, lorsqu'on observe en vue de dessus le surplomb glissant (1), un réseau de forages (6) sensiblement perpendiculaires les uns par rapport aux autres.

13. Procédé pour sécuriser des surplombs en danger de glissement et pour la stabilisation de glissements, selon l'une des revendications précédentes, caractérisé en ce que, depuis une pluralité d'emplacement situé au-dessous du surplomb glissant (1), en partant chaque fois avec un angle aigu, des forages (6) sont conduits essentiellement parallèlement à la direction de glissement du surplomb glissant (1) et, ce faisant, constituent des coins transversaux à angles aigus.

14. Procédé pour sécuriser des surplombs en danger de glissement et pour la stabilisation de glissements, selon l'une des revendications précédentes, caractérisé en ce que, en partant d'endroits situés latéralement hors de la masse en surplomb (1), des forages (6) orientés transversalement par rapport à la direction de glissement du surplomb glissant (1) sont conduits, à travers la totalité de la masse de glissement (1), jusque dans le terrain (10) se trouvant à l'opposé.

15. Procédé pour sécuriser des surplombs en danger de glissement et pour la stabilisation de glissements, selon la revendication 13, caractérisé en ce que les forages (6) orientés transversalement sont conduits dans la zone d'émincissement de glissement.

16. Procédé pour sécuriser des surplombs en danger de glissement et pour la stabilisation de glissements, selon l'une des revendications précédentes, caractérisé en ce que, dans des sections de forage appropriées, des produits d'injection sont injectés dans les zones de sol (4) environnantes, de manière à obtenir une liaison mécanique directe vis-à-vis du terrain (10) existant.

17. Procédé pour sécuriser des surplombs en danger de glissement et pour la stabilisation de glissements, selon l'une des revendications précédentes, caractérisé en ce qu'on utilise comme produit d'injection du ciment ou analogue.

18. Procédé pour sécuriser des surplombs en danger de glissement et pour la stabilisation de glissements, selon l'une des revendications précédentes, caractérisé en ce que on utilise comme produit d'injection de la paraffine, des résines, des silicates polymères, ou d'autres substances utilisables dans la technique de l'injection.

19. Procédé pour sécuriser des surplombs en danger de glissement et pour la stabilisation de glissements, selon l'une des revendications précédentes, caractérisé en ce que, dans une section partielle du forage, le produit d'injection est injecté dans les zones de sol environnantes, de manière à ce que la zone de sol consolidé aille du surplomb glissant jusqu'au terrain existant.

20. Procédé pour sécuriser des surplombs en danger de glissement et pour la stabilisation de glissements, selon l'une des revendications précédentes, caractérisé en ce que des forages d'injection et des forages de drainage sont conduits, souvent à peu prés parallèlement, en un ordre de succession alterné.
